# EUROPEAN PATENT APPLICATION

(11) **EP 4 488 901 A1**
(43) Date of publication of application: **08.01.2025**
(21) Application number: 24186489.1
(22) Date of filing: 04.07.2024
(51) Int. Cl.: G06Q 10/0631, G06Q 50/08

(54) **COMPUTER SYSTEM AND COMPUTER-READABLE MEDIUM FOR PROJECT MANAGEMENT**

(30) Priority: 04.07.2023 US 202318346833
(71) Applicant: Plumbata Intelligent Business Solutions Inc., Skead Ontario P0M 2Y0 (CA)
(72) Inventor: MCCORMICK, William, Skead, P0M 2Y0 (CA)
(74) Representative: V.O.

(57) **Abstract**

One inventive aspect of this specification is a computing device and computer-readable medium for managing a project has a labour management module to receive shift report data from one or more mobile devices associated with one or more workers working on the project, the shift report data including an electronic timesheet and a progress report, wherein the labour management module determines a project status of the project to automatically generate an alert report and a recommendation. Another inventive aspect of this specification is a computing device and computer-readable medium having a tender contract tender module to compare contractor labour rates with known labour rates to identify excessive labour rates.

## Description

### CROSS-REFERENCE TO RELATED APPLICATIONS

This is the first application filed for the present invention.

### TECHNICAL FIELD

The present invention relates generally to computer-implemented systems, computer-implemented methods and computer-readable media for project management and, more particularly, to systems, methods and computer-readable media for managing labour costs in a project.

### BACKGROUND

Various known project management techniques are routinely employed for managing various types of projects, such as for example large-scale construction projects. Various computer-implemented technologies provide tools for specific aspects of project management have been developed. Some examples are disclosed in the following documents: US10042636, US11321791, US8244565, US20200327467, US20190138961, US20170147960, US20130332368, and US20210110347, all of which are hereby incorporated by reference.

Despite these various tools and technologies, improvements in project management tools remain highly desirable. In particular, project cost overruns may arise due to mismanagement of labour costs. There is therefore a need for novel computer-implemented technologies for project management, particular in relation to management of labour costs.

### SUMMARY

A first main aspect of the present invention relate to a computing device and computer-readable medium for managing a project that has a labour management module to receive shift report data from one or more mobile devices associated with one or more workers working on the project, the shift report data including an electronic timesheet and a progress report, wherein the labour management module determines a project status of the project to automatically generate an alert report and a recommendation. Another main aspect of the present invention relates to a computing device and computer-readable medium having a tender contract tender module to compare contractor labour rates with known labour rates to identify excessive labour rates.

Accordingly, one particular aspect of the invention is a computing device for project management that includes a memory for storing a labour management module and a processor cooperating with the memory for executing the labour management module. The computing device includes a data transceiver cooperating with the processor and the memory to receive shift report data from one or more mobile devices associated with one or more workers working on the project, the shift report data including an electronic timesheet and a progress report. The labour management module executed by the processor determines a project status of the project in response to receiving the shift report data. The computing device further includes a user interface cooperating with the processor to automatically generate and present an alert report relating to the project status and a recommendation for managing the project.

Another particular aspect of the invention is a computer-readable medium comprising computer-readable instructions in software code which, when stored in a memory and executed by a processor of a computing device, cause the computing device to store a labour management module in the memory and execute, by the processor, the labour management module. The code further causes the computing device to receive, via a data transceiver cooperating with the processor and the memory, shift report data from one or more mobile devices associated with one or more workers working on the project, the shift report data including an electronic timesheet and a progress report. The code causes the computing device to determine a project status of the project in response to receiving the shift report data and to automatically generate and present, via a user interface, an alert report relating to the project status and a recommendation for managing the project.

Yet another aspect of the invention is a computing device for managing a project, the computing device comprising a memory for storing a contract tender module and a processor cooperating with the memory for executing the contract tender module, the contract tender module generating a labour bid form. The computing device includes a data transceiver cooperating with the processor and the memory to transmit the labour bid form and to receive a plurality of contractor bids specifying contractor labour rates. The contract tender module executed by the processor compares the contractor labour rates in the contractor bids with a database of known labour rates established by one or more collective bargaining agreements, and identifies excessive labour rates. The computing device further includes a user interface cooperating with the processor to automatically generate and present a report identifying the excessive labour rates.

A further aspect of the invention is a non-transitory computer-readable medium comprising computer-readable instructions in software code which when stored in a memory and executed by a processor of a computing device cause the computing device to store a contract tender module in a memory, execute the contract tender module by a processor cooperating with the memory, to generate a labour bid form, transmit the labour bid form via a data transceiver cooperating with the processor and the memory, and receive, via the data transceiver, a plurality of contractor bids specifying contractor labour rates. The contract tender module executed by the processor compares the contractor labour rates in the contractor bids with a database of known labour rates established by one or more collective bargaining agreements, identifies excessive labour rates and then automatically generates and presents via a user interface a report identifying the excessive labour rates.

The foregoing presents a simplified summary of the invention in order to provide a basic understanding of some aspects of the invention. This summary is not an exhaustive overview of the invention. It is not intended to identify essential, key or critical elements of the invention or to delineate the scope of the invention. Its sole purpose is to present some concepts in a simplified form as a prelude to the more detailed description that is discussed later. Other aspects of the invention are described below in relation to the accompanying drawings.

### BRIEF DESCRIPTION OF THE DRAWINGS

Further features and advantages of the present technology will become apparent from the following detailed description, taken in combination with the appended drawings, in which:
FIG. 1 is a schematic illustration of a computer system having a labour management module in accordance with an embodiment of the invention.
FIG. 2 is a schematic illustration of a computer system having a contract tender module in accordance with another embodiment of the invention.
FIG. 3 is a flowchart depicting a computer-implemented method of managing labour performed using the system of FIG. 1.
FIG. 4 is a flowchart depicting a computer-implemented method of preparing contract tenders performed using the system of FIG. 2.

It will be noted that throughout the appended drawings, like features are identified by like reference numerals.

### DETAILED DESCRIPTION

The following is a description of computer systems and computer-readable media (i.e. software applications) and related computer-implemented methods for project management. In one embodiment, the computer system, computer readable medium and method enable managing of labour, particularly labour costs. The computer system may have a computing device that stores and executes a labour management module as will be described in greater detail below. In another embodiment, the computer system, computer readable medium and method enable the creation of contract tenders. The computer system may have a computing device that stores and executes a contract tender module as will be described in greater detail below.

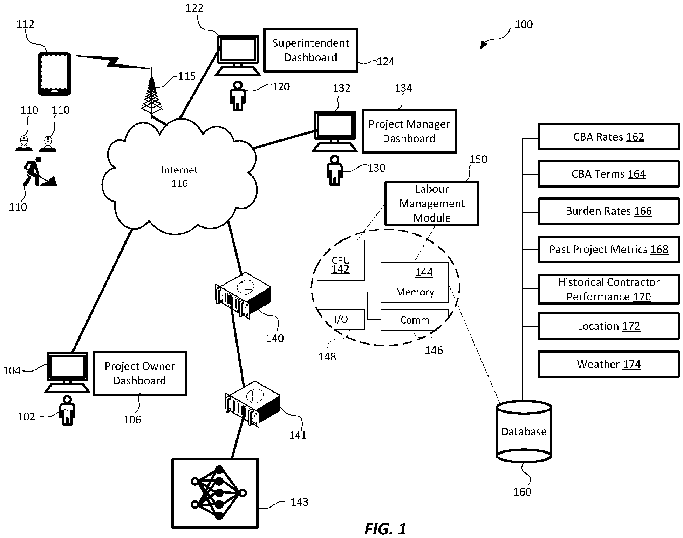

FIG. 1 illustrates a computer system for project management in accordance with one embodiment of the present invention. The computer system is generally denoted by reference numeral 100. The computer system 100 is designed to enable a user to manage a project, in particular to manage labour costs of a project. The computer system 100 includes a computing device 104 for a user 102. The user 102 in this instance is a project owner or project/workforce manager but could be any other person or entity tasked with managing the project in whole or in part. The computing device 104 may be a desktop computer or laptop. Examples include desktops or laptops manufactured by Dell, HP, Lenovo, Acer, MacBook, etc. The computing device 104 includes a user interface for providing a project owner dashboard 106. The computing device includes a memory and a processor for storing and executing a labour management module 150. The labour management module 150 may be stored and executed in whole or in part by the computing device. The labour management module 150 may be stored and executed in whole or in part on a server 140 that collaborates with the computing device 104 in a client-server paradigm or in any other distributed computing or cloud computing environment. The computing device 104 may connect to the server 140 via the Internet 116 or other data network, which may involve a virtual private network (VPN). There may be a single server 140, a server cluster, server farm or cloud server. The computing device 104 has a modem, router or data switch to communicate with the server 140 over the Internet 116 using standard Transmission Control Protocol/Internet Protocol (TCP/IP) datagrams. The server 140 may be a web server using Hypertext Transfer Protocol (HTTP). Web applications may be coded using Hypertext Markup Language (HTML), Cascading Style Sheets (CSS) or JavaScript.

The computing device 104 and project owner dashboard 106 enable the user 102 to manage a workforce, i.e. to manage the work (labour) performed by one or more workers (labourers) 110 who are working on the project. The project may be a construction project but it may also be any other type of project. In the illustrated embodiment, the workers 110 use a mobile device 112 (or multiple mobile devices as the case may be) to communicate shift report data via a base transceiver station (cell tower) 115 through the Internet 116 to the server 140. In a variant, the workers 110 may use a wired data connection to communicate the shift report data. In some embodiments, the shift report data includes an electronic timesheet and a progress report. However, the shift report data may also include other information and data about the shift, the workers, project completion details, milestones, certifications from inspectors, photographs, etc.

The mobile device 112 used by the worker(s) to report their shift data may be a cell phone or smart phone, a tablet, or any other handheld communication device or wireless communications device. Examples of mobile devices include Apple iPhone, Samsung Galaxy, Google Pixel, LG G7, iPad, Microsoft Surface, etc. Shift data may be transmitted using a cellular transceiver to and from the server 140 via the base station 115 over a cellular wireless network using cellular communication protocols and standards for packet data transfer such as GSM, CDMA, General Packet Radio Service (GPRS), EDGE, UMTS, LTE, 5G, etc. As shown in FIG. 1, the mobile device 112 communicates over a cellular radiofrequency channel with a cell tower, i.e. a base transceiver station (BTS) 115 which routes the data packets to the Internet via the appropriate gateway depending on the cellular protocol (3G, 4G, 5G). As noted above, in a variant, the workers may use a wired data connection, e.g. a desktop computer or laptop computer having a modem or router connected to the internet to communicate the shift data report. Although it is envisioned that the workers transmit their shift report data to the server 140, in another implementation, the server may prompt the workers to enter their shift report data. In a variant, if the workers do not send their shift report data by a certain time, the server sends a reminder to the worker or workers whose shift report data has not been received in a timely manner in order to prompt the worker or workers to reply with their shift report data. Optionally, if the labour management module identifies a discrepancy or non-compliant element of the shift data report such as an incorrect start time or end time, the labour management module can automatically transmit a query to the worker who submitted the shift data report to confirm that the non-compliant element of the shift data report was intentionally entered by the worker. Optionally, upon receipt of the confirmation, the labour management module can automatically notify the worker of the non-compliance with the contract. A copy of this notification can also be sent to the project/workforce manager. Optionally, prior to sending the notification to the worker, the labour management module can send a request to the project/workforce manager to confirm that the notification should be sent to the worker.

The mobile device 112 shown by way of example in FIG. 1 includes a microprocessor, memory, battery and a user interface. The user interface may include one or more input/output devices, such as a display screen. The mobile device optionally includes a microphone and a speaker. The mobile device 112 may include forwardly-facing and rearwardly-facing digital cameras. The mobile device includes a cellular radiofrequency (RF) transceiver. The mobile device also includes a location-determining subsystem for determining a current location of the user computing device. In the case of a mobile device, the location-determining subsystem may be a Global Navigation Satellite System (GNSS) chip such as a Global Positioning System (GPS) chip. The mobile device may also have a Wi-Fi transceiver, a Bluetooth transceiver, a near-field communication (NFC) chip, an accelerometer, and one or more other data communication ports or sockets for wired connections, e.g. USB, HDMI, Lightning connector, FireWire (IEEE 1394), etc. or ports or sockets for receiving non-volatile memory cards, e.g. SD (Secure Digital) card, miniSD card or microSD card.

The mobile device 112 shown by way of example in FIG. 1 may be used by each of the workers to input shift report data such as start time, end time, photos of progress, etc. The mobile device 112 may use the radiofrequency transceiver to transmit the shift report data via the base transceiver station 115 through the Internet 116 to the server 140.

As shown in FIG. 1, the computer system may communicate updates, alerts or reports to a project/workforce manager 120, e.g. a superintendent, by transmitting data to a project/workforce manager computing device 122 (e.g. superintendent computing device) for display on a project/workforce manager dashboard 124 (e.g. superintendent dashboard).

As further shown by way of example in FIG. 1, the computer system may communicate updates, alerts or reports to another project/workforce manager involved in the project, e.g. to a project manager 130 by transmitting data to a project manager computing device 132 for display on a project manager dashboard 134.

The server 140 may have a central processing unit (CPU) 142, a memory 144, a communication interface 146 and an input/output (I/O) device 148. The labour management module 150 may be stored in the memory 144 and executed by the CPU 142.

As depicted by way of example in FIG. 1, the server 140 may be communicatively connected to an additional server 141 or to a plurality of other servers to execute an artificial intelligence (AI) module 143. The AI module 143 can be trained to recognize correlations between data sets to efficiently and intelligently manage labour in a project. The artificial intelligence module may be configured to automatically generate an alert report and a recommendation by comparing the shift report data with the progress indicated in the progress report.

As depicted by way of example in FIG. 1, the memory 144 of the server 140 may also store a database 160 of project management data. This project management data may include collective bargaining agreement (CBA) rates 162, CBA terms 164, burden rates 166, past project metrics 168, historical contractor performance 170, location 172 and weather 174. Other types of data may optionally be included.

From the above description and from the depiction of FIG. 1, it should be understood that the computing device executing the labour management module may be either the computing device 104 and/or server 140, both of which comprise a memory for storing the labour management module 150, a processor cooperating with the memory for executing the labour management module 150, and a data transceiver cooperating with the processor and the memory to receive shift report data from one or more mobile devices 112 associated with one or more workers 110 working on the project, the shift report data including an electronic timesheet and a progress report. The shift report data may include a contract identifier, a worker identifier, a trade union name, location, shift type, date, start and end time. The shift report data may be for an individual or a group of workers. The labour management module 150 determines collective bargaining agreement rates from the trade union name and the location and compares collective bargaining terms with the shift type, date, start and end time. The labour management module 150 determines a project status of the project in response to receiving the shift report data. A user interface of the computing device cooperating with the processor automatically generates and presents an alert report relating to the project status and a recommendation for managing the project. The project status may include a financial status (projected to be on budget, exceeding budget, under budget) and/or a time status (projected to be completed on time, running late or to be completed early). The project status may be expressed in terms of monetary values (dollars, Euros, yen, etc.) or as a percentage of the overall project cost (10% over budget, 20% over budget, etc). Likewise, time status may be expressed in terms of any unit of time, e.g. days, weeks, months, etc. or as a percentage of the original time allocated (e.g. 5% longer than planned, 10% longer than planned, etc.) The project status may also compute and display an indication of any time-based penalties that the project manager and/or construction company may be liable to pay for completing the project late pursuant to the contract.

In one specific implementation, the alert report comprises an alert that a project cost has exceeded a predetermined cost threshold for a progress indicated in the progress report and the recommendation is automatically transmitted to a project/workforce manager device associated with a project/workforce manager (e.g. superintendent or project manager) of the one or more workers, e.g. to computing devices 122, 132.

In one particular exemplary implementation, the labour management module 150 comprises a plurality of business rules derived from one or more of collective bargaining agreement rates, collective bargaining agreement terms, past projects, historical contractor performance, local market conditions, and weather. Data for the business rules may be stored in a database 160. In one specific exemplary implementation, the labour management module 150 has a business rule that compares a start time and an end time from the shift report data with CBA terms to determine if the start time and/or end time gives rise to excess labour cost (e.g. overtime cost). If so, the labour management module 150 generates and sends an alert to a project/workforce manager. The alert may include a recommendation to change the start time and/or end time. In another specific exemplary implementation, the labour management module 150 has a business rule that compares a total amount of time worked for a particular worker over a period of time against CBA terms to determine if the particular worker is exceeding the maximum amount of time permitted by the CBA without incurring excess costs. If so, the labour management module 150 generates and sends an alert to a project/workforce manager. The alert may include a recommendation to replace the worker with a different worker or to add a further worker.

The concept of business rules is best demonstrated using an example. In the instance below, John Doe, a member of the IBEW 1687 trade union in Northern Ontario, has worked 33 hours from Monday to Wednesday. Under article 806 of IBEW 1687's collective bargaining agreement, John must be paid double-time for each hour worked in excess of 36 hours for the week. The combination of field data in the shift report will be applied against the business rules. As the criteria for a business rule is met, this will trigger an alert. The alert will be sent to the project/workforce manager (e.g. to a contract manager), with a recommendation to increase the crew size or rotate John Doe off as soon as possible. This will minimize the double-time hours for the remainder of the week.

To demonstrate the complexity and quantity of the business rules: IBEW has 11 local unions in Ontario. Each local union has approx. 200 CBA rates and 500 CBA terms (rules that impact the labour rates). In total, IBEW has approx. 2,200 CBA rates and 5,500 CBA terms to consider. Extending this concept across the 7 major construction trade unions in Ontario, there are more than 15,000 CBA rates and 38,000 CBA terms. The labour management module stores CBA rates and terms that either manually entered or automatically extracted from CBA documents.

When comparing timesheets against physical progress, the labour management module identifies that actual hours will exceed budgeted hours. The software creates an alert that is included in the project director report.

For example, a crew of electricians has a consistent start time of 6:00 am. which is outside the regular hours under the collective bargaining agreement of 8:00 am to 4:30 pm and results in double-time for two hours per day. In this example, the labour management module creates an alert that is included in the project/workforce manager report (e.g. contract manager report) with a recommendation to change the start time to 8:00 am.

As a further example, a crew of workers is consistently working excessive hours. The labour management module identifies that this trend only occurs when a particular superintendent is approving timesheets, which could indicate collusion between parties. This information is added to the project/workforce manager report (e.g. project director report) for review. For example, a crew of electricians has worked 12 hour shifts for three consecutive days on a project for which the governing collective agreement stipulates that 8 hours are regular time and 4 is paid at double time. The labour management module creates a trend alert to advise a project/workforce manager to consider adding an additional crew.

As a further example, some labourers are consistently working excessive hours on a weekly basis. The labour management module notices that this trend only seems to occur when a particular superintendent (owner's representative) is approving timesheets. The labour management module alerts the project/workforce manager that this could be due to potential collusion between parties. The labour management module can generate an escalated exception report for the project/workforce manager (e.g. project director) for review.

As yet a further example, the labour management module compares submitted timesheets against physical progress in the field and identifies a trend that predicts that labour cost will exceed budget based on current progress. The labour management module can generate an alert or escalated risk report based on this trend and transmit this alert or escalated risk report to the project/workforce manager (e.g. project director) for review.

The labour management module can be used to collect real-time field data required for efficient labour management. Examples of field data include contract number, employee name, worker ID, trade union, location, job classification, shift type, start and end time, and physical progress against milestones. The labour management module is able to apply the field data against business rules, derived from trade data. The key trade data used to develop business rules are, for example be, CBA rates and terms. However, other data may be used as well, such as burden rates, metrics and results from past projects, historical contractor performance, and local market conditions. The labour management module provides insight and recommendations to management in real-time to help management make better labour management decisions.

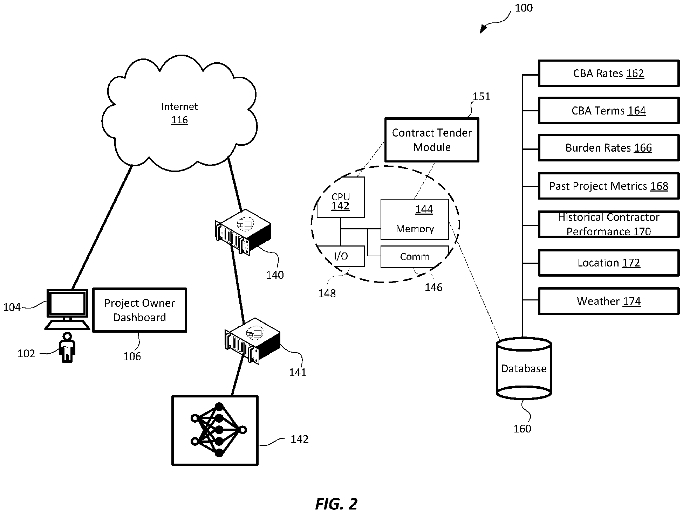

FIG. 2 illustrates a computer system for project management in accordance with another embodiment of the present invention. The computer system 100 of FIG. 2 is designed to enable a user to manage a project, in particular to prepare contract tenders for a project. Analogous in some respects to the system of FIG. 1, the computer system 100 depicted by way of example in FIG. 2 includes a computing device 104 for a user 102 who is the project owner, project/workforce manager or any other person or entity tasked with managing the project in whole or in part. The computing device 104 includes a user interface for providing a project owner dashboard 106. The computing device includes a memory and a processor for storing and executing a contract tender module 151. The contract tender module 151 may be stored and executed in whole or in part by the computing device. The contract tender module 151 may be stored and executed in whole or in part on a server 140 that collaborates with the computing device 104 in a client-server paradigm or in any other distributed computing or cloud computing environment. The computing device 104 may connect to the server 140 via the Internet 116 or other data network, which may involve a virtual private network (VPN). There may be a single server 140, a server cluster, server farm or cloud server. The computing device 104 has a modem, router or data switch to communicate with the server 140 over the Internet 116 using standard Transmission Control Protocol/Internet Protocol (TCP/IP) datagrams. The server 140 may be a web server using Hypertext Transfer Protocol (HTTP). Web applications may be coded using Hypertext Markup Language (HTML), Cascading Style Sheets (CSS) or JavaScript.

The computing device 104 and project owner dashboard 106 enable the user 102 to prepare a contact tender for work to be performed by one or more workers (labourers) 110 on a prospective project to be undertaken. The project may be a construction project but it may also be any other type of project.

In FIG. 2, as shown by way of example, the server 140 has a central processing unit (CPU) 142, a memory 144, a communication interface 146 and an input/output (I/O) device 148. The contract tender module 151 may be stored in the memory 144 and executed by the CPU 142.

As depicted by way of example in FIG. 2, the server 140 may be communicatively connected to an additional server 141 or to a plurality of other servers to execute an artificial intelligence (AI) module 143. The AI module 143 can be trained to recognize correlations between data sets to enable efficient creation of contract tenders.

As depicted by way of example in FIG. 2, the memory 144 of the server 140 may also store a database 160 of project management data to enable efficient and intelligent creation of contract tenders. This project management data may include collective bargaining agreement (CBA) rates 162, CBA terms 164, burden rates 166, past project metrics 168, historical contractor performance 170, location 172 and weather 174. Other types of data may optionally be included.

From the above description and from the depiction of FIG. 2, it should be understood that the contract tender module 151 can be executed by the computing device 104 or the server 140, both of which have a memory for storing a contract tender module and a processor cooperating with the memory for executing the contract tender module 151. The contract tender module 151 generates a labour bid form. A data transceiver cooperating with the processor and the memory transmits the labour bid form receives a plurality of contractor bids specifying contractor labour rates. The contract tender module 151 wherein the contract tender module executed by the processor compares the contractor labour rates in the contractor bids with a database of known labour rates established by one or more collective bargaining agreements, and identifies excessive labour rates. A user interface cooperating with the processor to automatically generate and present a report identifying the excessive labour rates.

In one implementation, the contract tender module 151 calculates contractor margins by comparing the contractor labour rates to the known labour rates established by the one or more collective bargaining agreements.

In one implementation, the contract tender module 151 also compares the contractor bids based on collective bargaining agreement terms, past project data, historical contractor performance, and local market conditions.

The contact tender module integrates CBA rates, which reflect the labour costs to contractors, into the bid evaluation process. This will enable project owners to accurately identify contractor margins by labour code. Identifying these margins will help project owners flag excessive labour rates and successfully negotiate them down.

The foregoing computer systems and computing devices can be used to perform novel computer-implemented methods of managing projects. These computer-implemented methods may be implemented as computer-readable media, i.e. software applications for storing and executing on one or more computing devices.

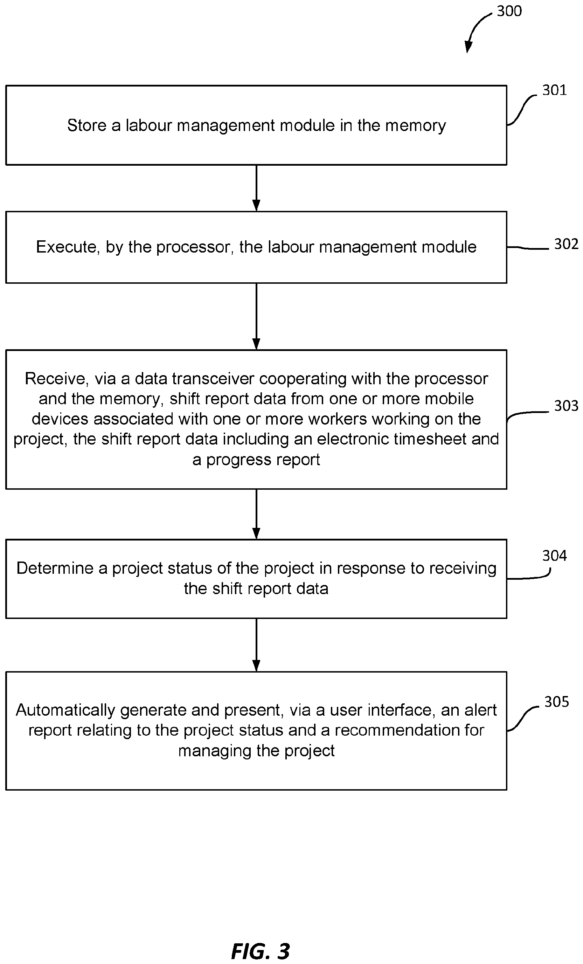

With respect to the embodiment of FIG. 1, this system can be used to perform a novel computer-implemented method 300 that is outlined in FIG. 3 for the purpose of managing labour in a project. As depicted by way of example in FIG. 3, the method 300 entails a step, act or operation of storing 301 a labour management module in the memory and then executing 302, by the processor, the labour management module. The method 300 further entails receiving 303, via a data transceiver cooperating with the processor and the memory, shift report data from one or more mobile devices associated with one or more workers working on the project, the shift report data including an electronic timesheet and a progress report. The method 300 further entails determining 304 a project status of the project in response to receiving the shift report data and automatically generating and presenting 305, via a user interface, an alert report relating to the project status and a recommendation for managing the project.

In a more specific implementation, the method 300 may involve the following steps, acts or operations:

For each contractor crew, a shift report will be completed usually by the foreman, using a handheld device provided by the project owner, by the contractor, or by using the foreman's or employee's own device(s). The superintendent or other responsible party will review the shift reports, and either approve, dispute, or return for correction. The superintendent or other responsible party will complete and approve the physical progress report. Once approved, field data from shift and physical progress reports will be uploaded to the labour management module which will forecast labour costs by comparing labour costs to date with physical progress. The forecasted labour costs will be included in a contract status report. The key tool used to collect field data will be the shift report, which is an electronic timesheet that also tracks physical progress against milestones. Information in the shift report will include contract number, employee name, worker ID, trade union, location, job classification, shift type, date, start and end time, and physical progress against milestones. There will also be space in the shift report to upload photos of issues or delays, such as equipment breakdowns. The shift report will be very easy to complete, as most fields will be prepopulated and there will only be 5 to 10 predefined milestones.

The labour management module will apply the field data against business rules stored in a memory or database by the module or in a memory or database that is accessible by the module. If the field data meets the criteria of a business rule, the system will create an alert, optionally containing recommendations. The alerts may optionally be consolidated in an alert report.

The labour management module will review and approve the alert report. Optionally, functionality is provided to manually change, edit or override automated alerts and/or recommendations.

Once the alert report is approved, the labour management module will generate management reports. Alert types will be mapped to different management reports including an exception log, Superintendent report, Project Manager report, Contract Manager report, and Project Director report. Management will review the reports and make labour management decisions in real-time.

Optionally, the labour management module will automatically generate invoices and payroll reports from the field data as required.

This technology enables management to identify potential issues and take corrective action before the issues lead to significant cost and schedule overruns.

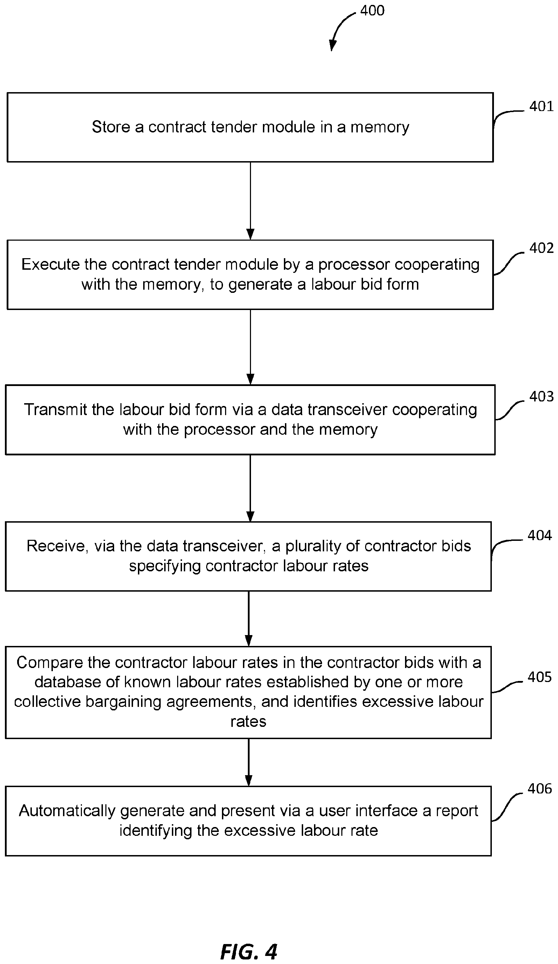

With respect to the embodiment depicted by way of example of FIG. 2, this system can be used to perform a novel computer-implemented method 400 that is outlined in FIG. 4 for the purposes of creating contract tenders. As depicted by way of example in FIG. 4, the method 400 entails a step, act or operation of storing 401 a contract tender module in a memory and then executing 402 the contract tender module by a processor cooperating with the memory, to generate a labour bid form. The method 400 entails transmitting 403 the labour bid form via a data transceiver cooperating with the processor and the memory. The method 400 further entails receiving 404, via the data transceiver, a plurality of contractor bids specifying contractor labour rates. The contract tender module executed by the processor compares 405 the contractor labour rates in the contractor bids with a database of known labour rates established by one or more collective bargaining agreements, and identifies excessive labour rates. The method 400 further entails automatically generating and presenting 406 via a user interface a report identifying the excessive labour rates.

In a more specific implementation, the method 400 may involve the following steps, acts or operations: The contract tender module generates an electronic bid form ("labour bid form") that includes CBA rates for each labour code. The project owner will issue the bid documents, including the labour bid form, to contractors. Contractors will prepare and submit the bid documents. The labour bid form will calculate the contractors' margins by comparing the contractors' labour rates to the relevant CBA rates. Once submitted, the labour bid form will be uploaded to the contract tender module or to a bid comparison dashboard. If applicable, a procurement team will compare the fixed price components of each bid. The procurement team will evaluate each contractor's ability to execute the project. The procurement team will use the bid comparison dashboard to identify excessive labour rates for time and material (T&M) work that require further negotiation. The procurement team will award the contract. This method uses CBA rates, which reflect the labour costs to the contractor, to accurately identify contractor margins. This enables the procurement team to identify excessive labour rates and negotiate them down.

In the foregoing description, the artificial intelligence (AI) module 143 develops an AI model that is able to automatically manage labour costs and to form contract tenders. The AI model can be trained to review union agreements and collective bargaining agreements to extract hourly rates and terms using natural language processing (NLP). The following steps may be used to train the AI model.

In a data collection step, a large dataset of union agreements in the construction industry is collected. Such agreements would cover a wide range of terms, including hourly rates, working conditions, benefits, and any other relevant information.

In a data preprocessing step, the collected data is cleaned and preprocessed to remove any irrelevant or redundant information. This step removes formatting inconsistencies, standardizes language, and organizes the data into a structured format.

In a labeling step, the data is labeled (or annotated) by labeling the relevant sections that contain hourly rates and terms. This enables the AI model to identify and extract the desired information accurately.

Model training is then performed by using machine learning techniques to train the AI model on the annotated data. Techniques such as named entity recognition (NER) and information extraction can be employed to teach the model to identify and extract hourly rates and terms from the union agreements.

Validation and refinement are then performed. This evaluates the trained model's performance by testing it on a separate validation dataset. This may involve an expert human validation of the results to train the AI model by confirming or correcting the AI model's learning. An expert human reviews the output of the AI model to determine if the AI model has learned to make correlations correctly.

In an integration step, once the AI model achieves satisfactory performance, the AI model is integrated into the AI module of the labour management module and/or into the contract tender module. The AI module can then receive new agreements as input, apply the trained model to extract relevant hourly rates and terms, and provide the extracted information at output for use in managing a project and/or in creating contract tenders.

In a further step of continuous learning and updating, as new union agreements become available, the AI module continues to collect and annotate relevant data to further train and improve the AI model. This ongoing process of continuing learning permits the model to remain up to date with the latest industry agreements and also the AI module to adapt to changes in the industry.

From the above description, is should be understood that either management of labour and/or creation of tenders can be performed using artificial intelligence or machine learning to perform one or more tasks in labour management and/or tender formation that could not be performed by a human or at least could not be performed efficiently by a human in a practical timeframe to be useful. The system, method or computer-readable medium disclosed in this specification may use various commands, queries, data flows, routines, data objects, data structures, etc., among elements of the software architecture (e.g., modules, network elements, device components, etc.) and data inputs to provide outputs in real time or near real time which are operations and processes that could not be practically performed manually or mentally by a human within the context of the disclosed embodiments.

Artificial neural networks or deep learning technologies can be used in the present embodiments for supervised and unsupervised learning. In supervised learning, models are trained using data that includes examples with inputs and outputs which the AI model learns to predict the outputs given the inputs. In unsupervised learning, no outputs are provided and the model instead learns to derive inferences from the data by itself. The most common type of unsupervised learning is clustering. Deep neural networks (DNNs) can also be used in the embodiments. A DNN may comprise an input layer, hidden layers, output layers, weights, biases, and activation functions. Examples of proprietary and open source deep learning platforms include Tensorflow, CNTK, Torch/Pytorch, and MXNet. DNN models (or in other instances non-DNN models) can use techniques such as, for example, support vector machines, Markov models, linear regression, logistic regression, and decision trees. In some embodiments, the AI module can include or implement perceptrons, multi-layer perceptrons, feedforward neural networks, convolutional neural networks (CNNs), and recurrent neural networks (RNNs). In the present embodiments, the AI module trains an AI model using a dataset of training data that enable the AI model to learn a correlation between a project event (e.g. an incorrect start time, incorrect end time, overworking by particular workers, et.) and a project outcome (e.g. time delay, cost overrun, etc). Once the AI model is trained, the AI model can be used by the AI module to automatically monitor progress of a project and to automatically generate alerts if the AI module detects one or more events that have an effect on the project outcome in terms of time and/cost.

These methods can be implemented in hardware, software, firmware or as any suitable combination thereof. That is, if implemented as software, the computer-readable medium comprises instructions in code which when loaded into memory and executed on a processor of a server or a user computing device such as a tablet or mobile device causes the user computing device to perform any of the foregoing method steps. These method steps may be implemented as software, i.e. as coded instructions stored on a computer readable medium which performs the foregoing steps when the computer readable medium is loaded into memory and executed by the microprocessor of the mobile device. A computer readable medium can be any means that contain, store, communicate, propagate or transport the program for use by or in connection with the instruction execution system, apparatus or device. The computer-readable medium may be electronic, magnetic, optical, electromagnetic, infrared or any semiconductor system or device. For example, computer executable code to perform the methods disclosed herein may be tangibly recorded on a computer-readable medium including, but not limited to, a floppy-disk, a CD-ROM, a DVD, RAM, ROM, EPROM, Flash Memory or any suitable memory card, etc. The method may also be implemented in hardware. A hardware implementation might employ discrete logic circuits having logic gates for implementing logic functions on data signals, an application-specific integrated circuit (ASIC) having appropriate combinational logic gates, a programmable gate array (PGA), a field programmable gate array (FPGA), etc. For the purposes of this specification, the expression "module" is used expansively to mean any software, hardware, firmware, or combination thereof that performs a particular task, operation, function or a plurality of related tasks, operations or functions. When used in the context of software, the module may be a complete (standalone) piece of software, a software component, or a part of software having one or more routines or a subset of code that performs a discrete task, operation or function or a plurality or related tasks, operations or functions. Software modules have program code (machine-readable code) that may be stored in one or more memories on one or more discrete computing devices. The software modules may be executed by the same processor or by discrete processors of the same or different computing devices.

For the purposes of interpreting this specification, when referring to elements of various embodiments of the present invention, the articles "a", "an", "the" and "said" are intended to mean that there are one or more of the elements. The terms "comprising", "including", "having", "entailing" and "involving", and verb tense variants thereof, are intended to be inclusive and open-ended by which it is meant that there may be additional elements other than the listed elements.

This invention has been described in terms of specific implementations and configurations which are intended to be exemplary only. Persons of ordinary skill in the art will appreciate that many obvious variations, refinements and modifications may be made without departing from the inventive concepts presented in this application. The scope of the exclusive right sought by the Applicant(s) is therefore intended to be limited solely by the appended claims.

## Claims

1. A computing device for managing a project, the computing device comprising:
a memory for storing a labour management module;
a processor cooperating with the memory for executing the labour management module;
a data transceiver cooperating with the processor and the memory to receive shift report data from one or more mobile devices associated with one or more workers working on the project, the shift report data including an electronic timesheet and a progress report;
wherein the labour management module executed by the processor determines a project status of the project in response to receiving the shift report data; and
a user interface cooperating with the processor to automatically generate and present an alert report relating to the project status and a recommendation for managing the project.

2. The computing device of claim 1 wherein the alert report comprises an alert that a project cost has exceeded a predetermined cost threshold for a progress indicated in the progress report and the recommendation is automatically transmitted to a manager device associated with a manager of the one or more workers.

3. The computing device of claim 1 wherein the labour management module comprises a plurality of business rules derived from one or more of collective bargaining agreement rates, collective bargaining agreement terms, past projects, historical contractor performance, local market conditions, and weather.

4. The computing device of claim 1 wherein the labour management module comprises an artificial intelligence module trained on past project data, the artificial intelligence module generating the alert report and the recommendation by comparing the shift report data with the progress indicated in the progress report.

5. The computing device of claim 1 wherein the shift report data comprises a contract identifier, a worker identifier, a trade union name, location, shift type, date, start and end time, wherein the labour management module determines collective bargaining agreement rates from the trade union name and the location and compares collective bargaining terms with the shift type, date, start and end time.

6. A non-transitory computer-readable medium comprising computer-readable instructions in software code which when stored in a memory and executed by a processor of a computing device cause the computing device to:
store a labour management module in the memory;
execute, by the processor, the labour management module;
receive, via a data transceiver cooperating with the processor and the memory, shift report data from one or more mobile devices associated with one or more workers working on the project, the shift report data including an electronic timesheet and a progress report;
determine a project status of the project in response to receiving the shift report data; and
automatically generate and present, via a user interface, an alert report relating to the project status and a recommendation for managing the project.

7. The non-transitory computer-readable medium of claim 6 wherein the alert report comprises an alert that a project cost has exceeded a predetermined cost threshold for a progress indicated in the progress report and wherein the recommendation is automatically transmitted to a manager device associated with a manager of the one or more workers.

8. The non-transitory computer-readable medium of claim 6 wherein the labour management module comprises a plurality of business rules derived from one or more of collective bargaining agreement rates, collective bargaining agreement terms, past projects, historical contractor performance, local market conditions, and weather.

9. The non-transitory computer-readable medium of claim 6 wherein the labour management module comprises an artificial intelligence module trained on past project data, the artificial intelligence module generating the alert report and the recommendation by comparing the shift report data with the progress indicated in the progress report.

10. The non-transitory computer-readable medium of claim 6 wherein the shift report data comprises a contract identifier, a worker identifier, a trade union name, location, shift type, date, start and end time, wherein the labour management module determines collective bargaining agreement rates from the trade union name and the location and compares collective bargaining terms with the shift type, date, start and end time.

11. A computing device for managing a project, the computing device comprising:
a memory for storing a contract tender module;
a processor cooperating with the memory for executing the contract tender module, the contract tender module generating a labour bid form;
a data transceiver cooperating with the processor and the memory to transmit the labour bid form and to receive a plurality of contractor bids specifying contractor labour rates;
wherein the contract tender module executed by the processor compares the contractor labour rates in the contractor bids with a database of known labour rates established by one or more collective bargaining agreements, and identifies excessive labour rates; and
a user interface cooperating with the processor to automatically generate and present a report identifying the excessive labour rates.

12. The computing device of claim 11 wherein the contract tender module calculates contractor margins by comparing the contractor labour rates to the known labour rates established by the one or more collective bargaining agreements.

13. The computing device of claim 11 wherein the contract tender module also compares the contractor bids based on collective bargaining agreement terms, past project data, historical contractor performance, and local market conditions.

14. A non-transitory computer-readable medium comprising computer-readable instructions in software code which when stored in a memory and executed by a processor of a computing device cause the computing device to:
store a contract tender module in a memory;
execute the contract tender module by a processor cooperating with the memory, to generate a labour bid form;
transmit the labour bid form via a data transceiver cooperating with the processor and the memory;
receive, via the data transceiver, a plurality of contractor bids specifying contractor labour rates;
wherein the contract tender module executed by the processor compares the contractor labour rates in the contractor bids with a database of known labour rates established by one or more collective bargaining agreements, and identifies excessive labour rates; and
automatically generate and present via a user interface a report identifying the excessive labour rates.

15. The non-transitory computer-readable medium of claim 14 wherein the contract tender module calculates contractor margins by comparing the contractor labour rates to the known labour rates established by the one or more collective bargaining agreements.

16. The non-transitory computer-readable medium of claim 14 wherein the contract tender module also compares the contractor bids based on collective bargaining agreement terms, past project data, historical contractor performance, and local market conditions.
